# FASCICULE DE BREVET EUROPEEN

(11) **EP 1 964 225 B1**
(45) Date de publication et mention de la délivrance du brevet: **13.02.2019**
(21) Numéro de dépôt: 06841892.0
(22) Date de dépôt: 08.12.2006
(51) Int. Cl.: H02G 3/04, H02G 3/06

(54) **CHEMIN DE CABLES EN FILS, NOTAMMENT CHEMIN DE CABLES A USAGE DOMESTIQUE**
KABELKANAL DES DRAHTTYPS, INSBESONDERE KABELKANAL FÜR HEIMVERWENDUNG
WIRE-TYPE CABLE RACEWAY, ESPECIALLY A CABLE RACEWAY FOR HOME USE

(30) Priorité: 13.12.2005 FR 0512570
(43) Date de publication de la demande: 03.09.2008
(73) Titulaire: Legrand France, 87000 Limoges (FR)
(72) Inventeur: QUERTELET, Stéphane, F-60190 Remy (FR); DELCOURT, Sébastien, F-60200 COMPIEGNE (FR)
(74) Mandataire: Santarelli
(86) Numéro de dépôt international: PCT/FR2006/002687
(87) Numéro de publication internationale: WO 2007/068813

(56) Documents cités:
- EP-A- 0 355 081
- DE-A1- 19 946 388
- DE-U1- 29 723 610

## Description

La présente invention concerne un chemin de câbles en fils suivant le préambule de la revendication 1.

Un chemin de câbles en fils présente généralement une forme allongée et une section en U. Il comporte des fils longitudinaux, appelés aussi fils de chaîne, et des fils transversaux, appelés également fils de trame. Généralement les fils de chaîne sont des fils rectilignes et les fils de trame présentent une forme en U. Tous ces fils sont soudés les uns aux autres de manière à être régulièrement espacés. Un tel chemin de câbles en fils, présentant une structure en treillis, comporte un fond destiné à servir de support aux câbles électriques (ou similaires) et des parois latérales, ou ailes, destinées à maintenir les câbles électriques sur le fond en formant une goulotte.

Il est également connu de réaliser des chemins de câbles dont les fils de trame présentent une forme dite en G. Un tel chemin de câbles est par exemple révélé dans le document EP-0 355 081.

Les chemins de câbles dits en G nécessitent généralement d'utiliser une pièce spécifique pour les fixer sur un support (sol, mur ou plafond). En outre, compte tenu notamment de la configuration des fils de chaîne, il est difficile avec les chemins de câbles en fils présentant une section en G de l'art antérieur de réaliser un changement de direction aussi bien lorsqu'il s'agit de réaliser un coude dans un plan vertical que dans un plan horizontal.

La présente invention a alors pour but de fournir un chemin de câbles en fils à section en G avec lequel un changement de direction est facile à réaliser. Après avoir réaliser un changement de direction, le chemin de câbles conserve de préférence une bonne rigidité. Ce chemin de câbles pourra également être fixé sur un support (sol, mur ou plafond) en utilisant de préférence des accessoires déjà existants. Un tel chemin de câbles sera de préférence adapté à une utilisation domestique.

A cet effet, l'invention propose un tronçon de chemin de câbles en fils tel que défini dans la revendication 1.

Le fait de prévoir d'une part des fils longitudinaux sur quatre faces longitudinales du tronçon de chemin de câbles et d'autre part que pour chaque fil longitudinal d'une face longitudinale du tronçon de chemin de câbles se trouve sur la face opposée un fil longitudinal en vis-à-vis, permet de faciliter un changement de direction dans le chemin de câbles réalisé avec le tronçon de chemin de câbles tout en gardant une bonne rigidité. En effet, pour réaliser un coude dans un tronçon de chemin de câbles selon l'invention, il convient de couper les fils longitudinaux entre deux fils transversaux successifs sauf les deux fils correspondant au plan de pliage souhaité. On peut alors facilement réaliser un coude en conservant une liaison entre les deux parties du tronçon formée par les deux fils longitudinaux non coupés. Ceci permet de conserver une rigidité suffisante au niveau du coude. Cette forme de réalisation avec quatre fils longitudinaux (ou plus) est très bien adaptée à la réalisation de chemins de câbles de petites dimensions pouvant être utilisés aussi dans des applications domestiques.

Dans une forme de réalisation préférée donnant une meilleure rigidité au chemin de câbles et permettant un meilleur maintien des câbles dans le chemin de câbles, il est prévu qu'un fil de chaîne longitudinal est disposé sur chacune des faces longitudinales du tronçon de chemin de câbles.

Pour des raisons de symétrie et donc de commodité d'utilisation, les fils de chaîne longitudinaux sont disposés de préférence dans des plans médians longitudinaux du tronçon de chemin de câbles.

Pour éviter que les extrémités correspondant à un bord de l'ouverture réalisée dans les fils de trame transversaux ne forment une saillie agressive, un fil de chaîne longitudinal relie avantageusement les bords libres des fils de trame transversaux correspondant à un bord de l'ouverture réalisée dans ceux-ci.

Pour mieux pouvoir fixer un tronçon de chemin de câbles en fils selon l'invention contre une paroi, de manière à ce qu'il vienne plaquer contre celle-ci, les fils de chaîne longitudinaux sont disposés avantageusement à l'intérieur des fils de trame transversaux.

Un tronçon de chemin de câbles en fils selon l'invention peut présenter, dans une forme de réalisation particulière, une section transversale sensiblement carrée.

Un tronçon de chemin de câbles selon l'invention présente par exemple une section transversale sensiblement rectangulaire, éventuellement carrée. C'est la forme la plus simple d'un tronçon de chemin de câbles selon l'invention. Un tel tronçon comporte alors par exemple des fils de trame transversaux présentant quatre côtés. A chacun de ces côtés correspond alors une face longitudinale du tronçon de chemin de câbles. Ces quatre faces, dans une forme de réalisation sont :
- un fond,
- une première aile latérale attachée à un premier bord longitudinal du fond,
- un rebord supérieur s'étendant sensiblement parallèlement au fond depuis le bord de la première aile latérale opposé au fond et de largeur moindre par rapport au fond, ainsi que
- une seconde aile latérale, sensiblement parallèle à la première, s'étendant à partir du bord du fond opposé à la première aile latérale et de hauteur moindre que la première aile latérale.

Selon une variante de réalisation d'un tel tronçon de chemin de câbles, la hauteur de la seconde aile latérale correspond sensiblement à la moitié de la hauteur de la première aile latérale, et la largeur du rebord supérieur correspond sensiblement à la moitié de la largeur du fond du tronçon de chemin de câbles.

Des détails et avantages de la présente invention ressortiront mieux de la description qui suit, faite en référence aux dessins schématiques annexés sur lesquels :
La figure 1 est une vue de face à échelle agrandie d'un tronçon de chemin de câbles selon l'invention,
La figure 2 est une vue de dessus d'un tronçon de chemin de câbles selon l'invention formant un coude,
La figure 3 représente un éclissage de deux tronçons de chemin de câbles selon l'invention,
La figure 4 illustre la fixation d'un chemin de câbles selon l'invention sur un sol; un mur ou un-plafond;
La figure 5 illustre une manière de suspendre un chemin de câbles selon l'invention à un plafond,
La figure 6 illustre une autre variante de fixation d'un chemin de câbles selon l'invention sur un mur, un sol ou un plafond, et
Les figures 7, 8 et 9 sont des vues correspondant à la figure 1 pour des variantes de réalisation d'un tronçon de chemin de câbles selon l'invention.

Les tronçons de chemins de câbles représentés aux dessins comportent, de manière connue de l'homme du métier, des fils de deux types différents formant un treillis. On trouve ainsi d'une part des fils longitudinaux 2 qui s'étendent de manière rectiligne, ou sensiblement rectiligne, sur toute la longueur d'un tronçon de chemin de câbles (avant bien entendu une éventuelle déformation de celui-ci) et d'autre part des fils transversaux 4 disposés suivant un pas régulier le long des fils longitudinaux 2. Les fils longitudinaux 2 sont appelés généralement fils de chaîne 2 tandis que les fils-transversaux 4 sont appelés plus couramment fils de trame 4.

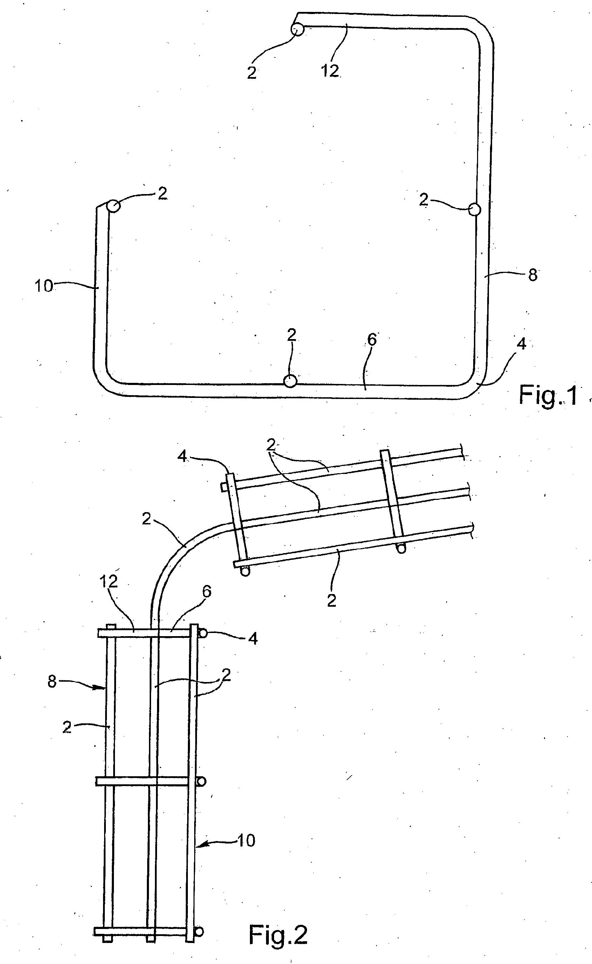

Dans la plupart des chemins de câbles, les fils transversaux présentent une forme en U. Dans la présente invention, ces fils transversaux 4 présentent une forme dite en G. Ainsi, ces fils transversaux 4 présentent la forme d'un polygone auquel un coin, ou angle, a été supprimé. Le tronçon de chemin de câbles de la figure 1 correspond à une forme de réalisation particulière. Le polygone choisi ici est un polygone à quatre côtés et plus précisément un carré. Le tronçon ainsi représenté comporte tout d'abord un fond 6. Il comporte également une première aile latérale 8, une seconde aile latérale 10 et un retour 12. La première aile latérale 8 s'étend à partir d'un bord longitudinal du fond 6 sur toute la hauteur et toute la longueur du tronçon de chemin de câbles. La première aile latérale 8 opposée au fond 6 porte le retour 12. Ce dernier s'étend sensiblement parallèlement au fond 6 et se trouve, par rapport à la première aile latérale 8, du même côté que le fond 6. La largeur de ce retour 12 est moindre par rapport à la largeur du fond 6.

La seconde aile latérale 10 s'étend parallèlement à la première aile latérale 8 à partir du second bord longitudinal du fond 6. Cette seconde aile latérale 10 ne s'étend que sur une partie de la hauteur du tronçon de chemin de câbles.

Dans la forme de réalisation particulière représentée sur les figures 1 à 6, les fils transversaux 4 présentent une forme de base carrée de laquelle a été retirée le quart supérieur gauche (l'orientation haut/bas et droite/gauche se reportant à la figure 1). Ainsi, le retour 12 des tronçons de chemins de câbles représentés sur les figures 1 à 6 présente une largeur correspondant sensiblement à la moitié de la largeur du fond 6 et la hauteur de la seconde aile latérale 10 correspond sensiblement à la moitié de la hauteur de la première aile latérale 8.

Comme on peut le remarquer sur les figures 1 à 6; les tronçons de chemins de câbles représentés comportent quatre fils longitudinaux 2. Chaque face longitudinale du chemin de câbles reçoit ainsi un fil longitudinal 2. Un premier fil longitudinal rejoint les extrémités libres des fils transversaux 4 de la seconde aile latérale du chemin de câbles. En vis-à-vis de ce premier fil longitudinal 2, se trouve un second fil longitudinal disposé à mi-hauteur de la première aile latérale. Ces deux premiers fils longitudinaux 2 se trouvent ainsi dans un plan sensiblement parallèle au fond 6 du tronçon de chemin de câbles. Dans la forme de réalisation particulière représentée sur les figures 1 à 6, le plan contenant les deux premiers fils longitudinaux 2 est un plan médian du tronçon de chemin de câbles.

Un troisième fil longitudinal 2 relie les extrémités libres des retours 12 du tronçon de chemin de câbles. Face à ce troisième fil longitudinal 2, se trouve, en vis-à-vis, un quatrième fil longitudinal 2 placé au milieu du fond 6. Ainsi, les troisième et quatrième fils longitudinaux 2 se trouvent dans un plan sensiblement parallèle aux première et seconde ailes latérales du tronçon de chemin de câbles. Ce plan est également, dans le cas de figure représenté sur les figures 1 à 6, un plan médian du tronçon de chemin de câbles.

La figure 2 illustre comment un tel tronçon de chemin de câbles peut être utilisé pour former un coude. La figure 2 montre un tronçon de chemin de câbles en vue de dessus. Pour réaliser le coude représenté sur cette figure, un opérateur a coupé deux sections de fils longitudinaux 2 disposés en vis-à-vis entre deux fils transversaux 4 successifs. Dans le cas de la figure 2, le coude est réalisé en coupant entre deux fils transversaux 4 des sections de fils longitudinaux 2 correspondant aux fils soudés sur les ailes latérales 8, 10 du tronçon de chemin de câbles. La figure 2 représente alors un chemin de câbles coudé dans un plan parallèle au plan du fond 6 du tronçon de chemin de câbles. Si l'on suppose que ce plan est un plan horizontal, on peut également réaliser un coude dans un plan vertical en sectionnant entre deux fils transversaux 4 des sections des fils longitudinaux 2 se trouvant au niveau du retour 12 et du fond 6 du tronçon de chemin de câbles.

On remarque que les parties du tronçon de chemin de câbles se trouvant de part et d'autre du coude sont reliées par deux fils longitudinaux qui ont été courbés de l'angle correspondant à la pliure du coude souhaitée. Malgré ce coude, le-tronçon de chemin de câbles conserve ainsi une rigidité importante. En outre, on remarque que quasiment toutes les orientations peuvent être prises au niveau d'un coude réalisé dans le tronçon de chemin de câbles. Au lieu de sectionner deux fils longitudinaux se trouvant en vis-à-vis, il est possible de sectionner deux fils longitudinaux voisins. On peut alors réaliser un pliage, dans le cas des tronçons de chemin de câbles représentés sur les figures 1 à 6, avec un changement de plan.

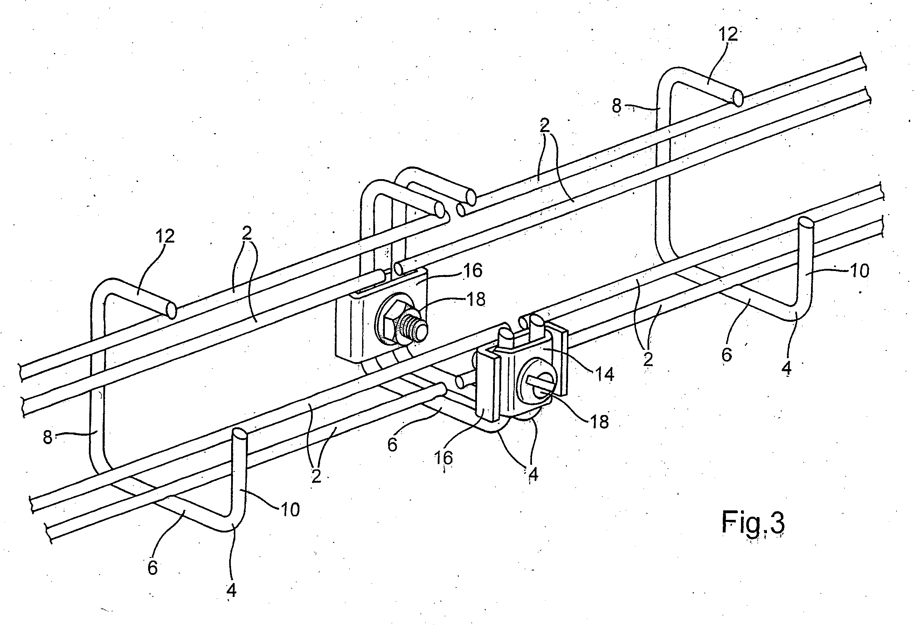

La figure 3 illustre l'éclissage de deux tronçons de chemin de câbles. Dans l'exèmple représenté, l'éclissage est réalisé à l'aide de deux éclisses commercialisées sous la marque CABLOFIL avec les références CE25-CE30. L'homme du métier connaît ce type d'éclissage. En résumé, deux tronçons de chemin de câbles sont mis bout à bout de telle sorte qu'un fil transversal 4 d'extrémité d'un tronçon de chemin de câbles vient faire face à un fil transversal 4 d'extrémité de l'autre tronçon de chemin de câbles. L'éclisse comporte alors une première pièce profilée 14 en U de largeur moindre et une seconde pièce profilée 16 en U de largeur plus importante. La première pièce profilée 14 est mise en place de manière à chevaucher les deux fils transversaux 4 d'extrémité. La seconde pièce profilée 16 vient face à la première pièce profilée 14 de manière à chevaucher d'une part les fils transversaux 4 d'extrémité et d'autre part les branches de la première pièce profilée 14. Un alésage est prévu dans chacune des pièces profilées 14 et 16. Une fois celles-ci en place, elles sont maintenues par un boulon 18. On réalise ainsi, de manière fort classique, l'éclissage de deux tronçons de chemin de câbles selon l'invention. Bien entendu, d'autres éclisses existantes permettent elles aussi de réaliser un éclissage équivalent.

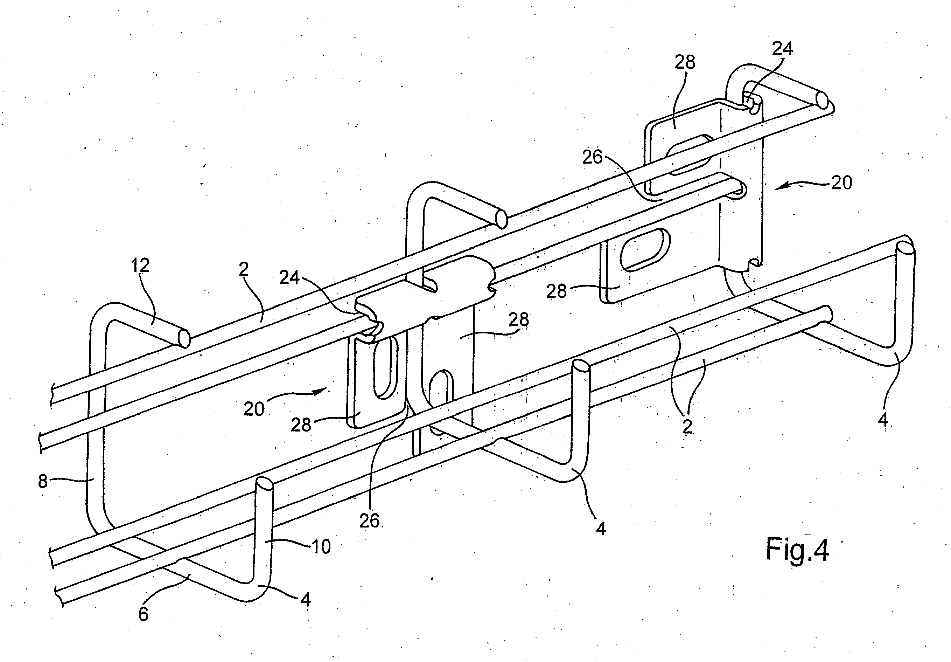

La figure 4 illustre la fixation d'un chemin de câbles selon l'invention sur un sol, un plafond, ou une paroi latérale.

On a représenté sur cette figure 4 deux accessoires similaires montés de deux manières différentes sur la première aile latérale 8 du tronçon de chemin de câbles. Il s'agit à chaque fois d'une patte de fixation 20 commercialisée sous la marque CABLOFIL avec la référence FTX. Bien entendu, la figure 4 est un exemple d'illustration et dans la pratique on ne rencontre généralement pas un tronçon de chemin de câbles muni d'une patte de fixation 20 sur deux fils de trame transversaux voisins, les pattes étant montées comme représenté sur cette figure. Cette figure a uniquement pour but de montrer comment une telle patte de fixation 20 peut être adaptée à un chemin de câbles selon l'invention. L'homme du métier sait comment de tels accessoires peuvent être utilisés pour la fixation d'un chemin de câbles.

Sans entrer dans le détail, la patte de fixation 20 comporte d'une part une rainure 24 et d'autre part une fente 26 s'étendant perpendiculairement à la rainure 24. De part et d'autre de la fente 26 se trouve à chaque fois une patte 28. La patte de fixation 20 est disposée à l'intersection d'un fil de chaîne longitudinal 2 avec un fil de trame transversal 4. Pour une première patte de fixation 20, le fil de chaîne longitudinal 2 vient se loger dans la rainure 24 et le fil de trame transversal 4 prend place dans la fente 26. Pour la seconde patte de fixation 20, le fil de trame transversal 4 vient se loger dans la rainure 24 et le fil de chaîne longitudinal 2 prend place dans la fente 26. La patte de fixation 20 est alors plaquée contre une surface (sol, mur ou plancher) et fixée à l'aide par exemple de deux vis traversant les pattes 28. Selon le type de paroi et le montage souhaité, la patte de fixation 20 sera montée au niveau du retour 12, de la première paroi latérale 8 ou du fond 6 d'un tronçon de chemin de câbles, plus rarement au niveau d'une seconde aile latérale 10. On remarque ici que lorsqu'un tronçon de chemin de câbles selon l'invention est fixé sur une paroi, ce tronçon vient bien plaquer contre la paroi grâce notamment au fait que les fils longitudinaux 2 sont disposés à l'intérieur des fils transversaux 4.

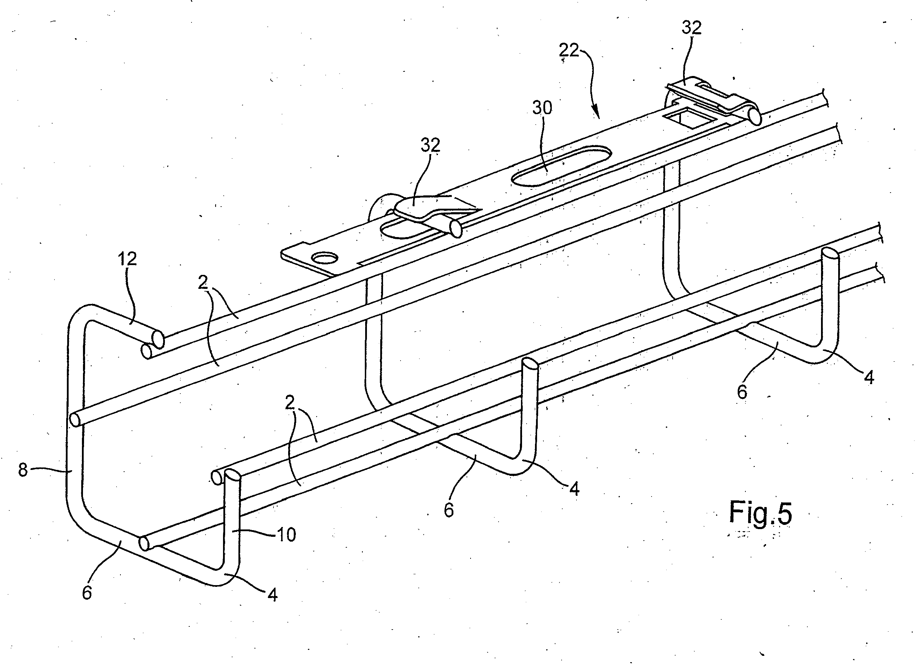

La figure 5 illustre comment un tronçon de chemin de câbles selon l'invention peut être muni d'une suspension 22 de manière à être par la suite suspendu à un plafond. La suspension 22 correspond par exemple à une suspension commercialisée sous la marque CABLOFIL avec la référence SAS. Cette suspension 22 prend place de préférence sur le retour 12 d'un tronçon de chemin de câbles. Elle est utilisée classiquement en combinaison avec une tige filetée (non représentée) fixée dans un plafond. On remarque sur la figure 5 que la suspension 22 se présente sous la forme d'une plaque présentant un alésage allongé 30 et deux crochets 32 formant saillies sur une face de la plaque de la suspension 22. Les crochets 32 sont espacés l'un par rapport à l'autre d'une distance correspondant au pas séparant les fils transversaux 4.

Ainsi, deux fils transversaux 4 successifs viennent en prise- dans les deux crochets 32 et l'ensemble de la suspension 22 est fixé, par exemple à l'aide d'un écrou non représenté, à la tige filetée descendant du plafond. La tige traverse la suspension 22 au niveau de son alésage allongé 30.

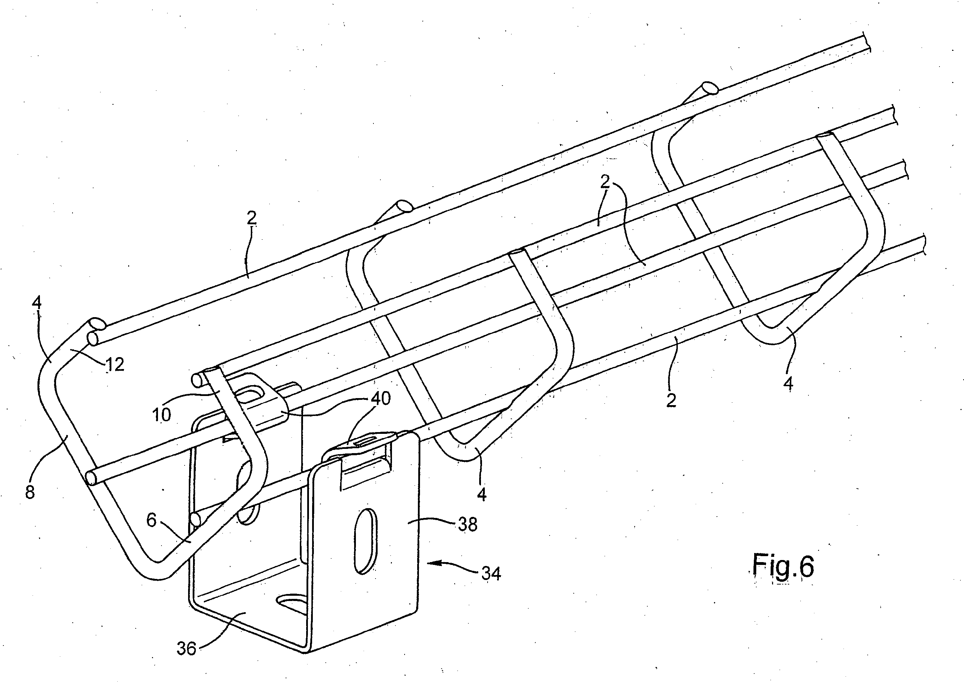

La figure 6 montre une autre manière de fixer un tronçon de chemin de câbles selon l'invention. Sur cette figure, le tronçon de chemin de câbles est représenté sur un berceau 34 correspondant à un berceau commercialisé sous la marque CABLOFIL sous la référence UC35. Un tel berceau 34 peut être utilisé ici. pour la fixation d'un chemin de câbles sur un plancher ou le long d'une paroi latérale telle un mur. Le berceau 34 se présente sous la forme d'un étrier présentant une base 36 et deux ailes 38. Chaque aile porte à son extrémité libre une languette de fixation 40. Chacune de ces languettes (qui n'est pas décrite plus dans le détail ici) permet de recevoir par encliquetage un fil, notamment un fil longitudinal 2 d'un tronçon de chemin de câbles. La figure 6 suggère de monter le tronçon de chemin de câbles de façon "inclinée". Ainsi, les fils longitudinaux 2 du tronçon de chemin de câbles fixés sur le fond 6 et la première aile latérale 8 de ce tronçon sont encliquetés sur les ailes 38 du berceau 34. De cette manière lorsque la base 36 du berceau 34 est fixée sur un plancher, des câbles peuvent être introduits par le haut dans le chemin de câbles selon l'invention. La base 36 du berceau 34 peut également être fixée sur une paroi verticale telle un mur ou sur un plafond. Dans ces derniers cas, le chemin de câbles selon l'invention présente une ouverture latérale pour l'introduction, et éventuellement le retrait, de câbles.

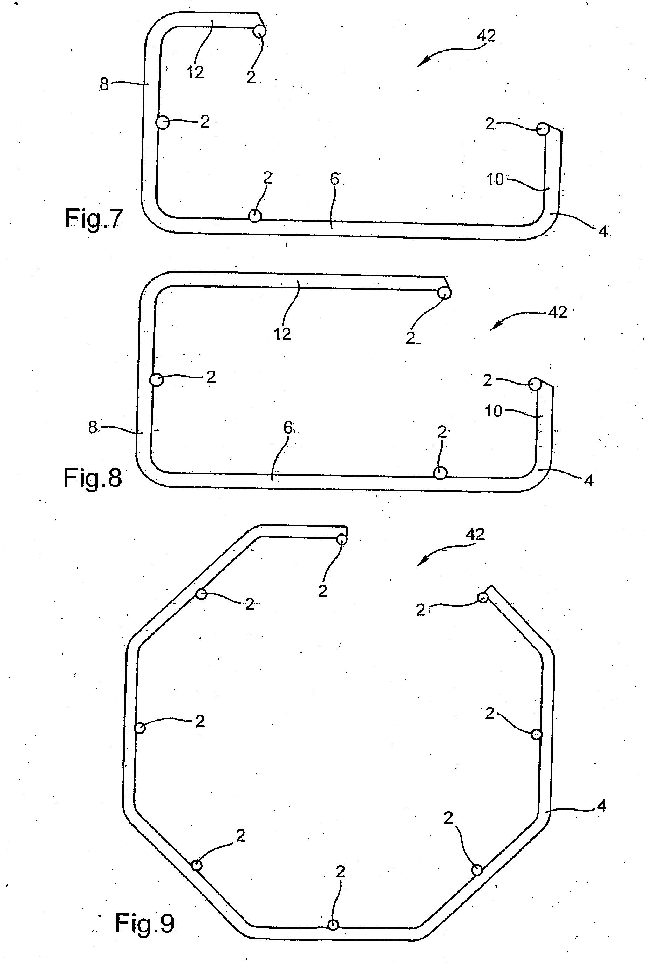

Les figures 7 et 8 représentent en vue de face deux variantes de réalisation d'un tronçon de chemin de câbles à section globalement rectangulaire. Le tronçon de chemin de câbles représenté sur la figure 7 présente une grande ouverture tandis que celui de la figure 8 présente une ouverture plus petite. On retrouve dans ces deux cas de figure un fond 6, une première aile latérale 8, une seconde aile latérale 10 de hauteur moindre que la première aile latérale 8 et un retour 12 de largeur moindre que le fond 6. Les chemins de câbles représentés sur les figures 7 et 8 comportent un fil de chaîne longitudinal 2 par face du chemin de câbles. On retrouve ainsi quatre fils de chaîne longitudinaux 2. Le fil de chaîne placé au niveau du retour 12 relie les extrémités libres des fils de trame transversaux 4 bordant l'ouverture d'accès du tronçon de chemin de câbles. De même, le fil de chaîne longitudinal 2 de la seconde aile latérale 10 relie les extrémités libres des fils de trame transversaux 4 de l'autre bord de l'ouverture du tronçon de chemin de câbles.

Pour les deux formes de réalisation des figures 7 et 8, on remarque que le fond 6 du tronçon de chemin de câbles représenté comporte un fil de chaîne longitudinal 2 disposé en vis-à-vis du fil de chaîne longitudinal 2 du retour 12. Ces deux fils de chaîne longitudinaux 2 se trouvent dans un plan sensiblement parallèle aux ailes du tronçon de chemin de câbles. Dans cette forme de réalisation, ce plan n'est pas un plan médian du tronçon de chemin de câbles.

La figure 9 montre à titre d'exemple une variante de réalisation dans laquelle les fils de trame transversaux d'un tronçon de chemin de câbles selon l'invention présentent une forme globalement octogonale; Dans ce cas de figure, chaque fil de trame transversal 4 présente huit côtés, et de ce fait le tronçon de chemin de câbles correspondant présente huit faces longitudinales. Dans la forme de réalisation représentée, le tronçon de chemin de câbles comporte huit fils de chaîne longitudinaux 2, un fil de chaîne longitudinal 2 par face longitudinale du tronçon de chemin de câbles. Une ouverture 42 réalisée au niveau d'un angle de l'octogone dans chacun des fils de trame transversaux 4 permet l'accès à l'intérieur du chemin de câbles. On remarque ici qu'un fil de chaîne longitudinal 2 est situé au niveau de chacun des deux bords de l'ouverture 42. Les fils de chaîne longitudinaux 2 sont disposés deux par deux en vis-à-vis. En variante de réalisation, on pourrait avoir, toujours avec des fils de trame transversaux de profil octogonal, un nombre de fils de chaîne longitudinaux 2 différent. On pourrait ainsi par exemple avoir quatre ou six fils longitudinaux.

Comme il ressort de la description qui précède, les chemins de câbles décrits sont chacun d'une structure simple mais offrent de nombreux avantages. Il est notamment très facile de les mettre en oeuvre. Des tronçons de tels chemins de câbles peuvent être facilement coudés et les tronçons ainsi coudés conservent une bonne rigidité. En outre, grâce notamment au fait que les fils longitudinaux 2 se trouvent montés à l'intérieur des fils transversaux 4, la fixation des tronçons de chemin de câbles est facilitée. De tels tronçons peuvent être plaqués contre une paroi à l'aide de dispositifs de fixation classiques de l'art antérieur. Contrairement à la plupart des autres chemins de câbles en G connus, il est inutile de prévoir ici des accessoires spécifiques, tant pour l'éclissage des tronçons de chemin de câbles que pour leur fixation sur un support.

La forme de réalisation carrée (mais une forme rectangulaire est aussi envisageable) est particulièrement bien adaptée à des chemins de- câbles de petites dimensions, notamment des chemins de câbles destinés-à un usage domestique. De tels chemins de câbles peuvent être utilisés pour recevoir les nombreux câbles électriques que l'on trouve dans certaines pièces de la maison afin d'éviter que ces câbles ne traînent sur le sol ou ne pendent le long d'un mur ou sous un plafond. La facilité d'utilisation et de montage de ce chemin de câbles en fait un accessoire parfaitement adapté à un usage domestique.

La présente invention ne se limite pas à la forme de réalisation préférée décrite ci-dessus à titre d'exemple non limitatif. Elle concerne également les différentes formes de réalisation à la portée de l'homme du métier, dans le cadre des revendications ci-après.

## Revendications

1. Tronçon de chemin de câbles en fils comportant d'une part des fils de chaîne longitudinaux (2) sensiblement rectilignes et d'autre part des fils de trame transversaux (4) ayant une forme polygonale présentant une ouverture réalisée dans un angle et un nombre pair de côtés, ledit tronçon comportant
au moins quatre fils de chaîne longitudinaux (2) portés par au moins quatre côtés distincts (6, 8, 10, 12) des fils de trame transversaux, **caractérisé en ce que** lesquels quatre côtés (6, 8, 10, 12) portent chacun un seul fil de chaîne longitudinal (2), et **en ce qu'**à chaque fil de chaîne longitudinal (2) correspond un fil de chaîne longitudinal (2) d'un côté opposé, les deux fils de chaîne longitudinaux (2) correspondants étant disposés en vis-à-vis, c'est-à-dire dans un même plan sensiblement parallèle à l'une des faces longitudinales du tronçon de chemin de câbles.

2. Tronçon de chemin de câbles en fils selon la revendication 1, **caractérisé en ce qu'**un fil de chaîne longitudinal (2) est disposé sur chacune des faces longitudinales du tronçon de chemin de câbles.

3. Tronçon de chemin de câbles en fils selon l'une des revendications 1 ou 2, **caractérisé en ce que** les fils de chaîne longitudinaux (2) sont disposés dans des plans médians longitudinaux du tronçon de chemin de câbles.

4. Tronçon de chemin de câbles en fils selon l'une des revendications 1 à 3, **caractérisé en ce qu'**un fil de chaîne longitudinal (2) relie les bords libres des fils de trame transversaux (4) correspondant à un bord de l'ouverture réalisée dans ceux-ci.

5. Tronçon de chemin de câbles en fils selon l'une des revendications 1 à 4, **caractérisé en ce que** les fils de chaîne longitudinaux (2) sont disposés à l'intérieur des fils de trame transversaux (4).

6. Tronçon de chemin de câbles en fils selon l'une des revendications 1 à 5, **caractérisé en ce qu'**il présente une section transversale sensiblement rectangulaire.

7. Tronçon de chemin de câbles selon la revendication 6, **caractérisé en ce qu'**il comporte des fils de trame transversaux (4) présentant quatre côtés auxquels correspondent quatre faces longitudinales du tronçon de chemin de câbles :
- un fond (6),
- une première aile latérale (8) rattachée à un premier bord longitudinal du fond (6),
- un rebord (12) supérieur s'étendant sensiblement parallèlement au fond (6) depuis le bord de la première aile latérale (8) opposé au fond (6) et de largeur moindre par rapport au fond (6), ainsi que
- une seconde aile latérale (10), sensiblement parallèle à la première (8), s'étendant à partir du bord du fond (6) opposé à la première aile latérale (8) et de hauteur moindre que la première aile latérale (8).

8. Tronçon de chemin de câbles selon la revendication 7, **caractérisé en ce que** la hauteur de la seconde aile latérale (10) correspond sensiblement à la moitié de la hauteur de la première aile latérale (8), et **en ce que** la largeur du rebord (12) supérieur correspond - sensiblement à la moitié de la largeur du fond (6) du tronçon de chemin de câbles.

9. Tronçon de chemin de câbles selon l'une des revendications 6 à 8, **caractérisé en ce qu'**il présente une section transversale sensiblement carrée.

## Patentansprüche

1. Gitterkabelrinnenabschnitt mit im Wesentlichen geraden, längs verlaufenden Kettdrähten (2) einerseits und polygonförmigen quer verlaufenden Schussdrähten (4) andererseits, die eine in einer Ecke ausgeführte Öffnung und eine gerade Anzahl Seiten aufweisen, wobei der Abschnitt wenigstens vier längs verlaufende Kettdrähte (2) umfasst, die von wenigstens vier verschiedenen Seiten (6, 8, 10, 12) der quer verlaufenden Schussdrähte gehalten werden,
**dadurch gekennzeichnet, dass** die vier Seiten (6, 8, 10, 12) jeweils einen einzigen längs verlaufenden Kettdraht (2) halten, und dass jedem längs verlaufenden Kettdraht (2) ein längs verlaufender Kettdraht (2) auf einer entgegengesetzten Seite entspricht, wobei die beiden korrespondierenden längs verlaufenden Kettdrähte (2) einander gegenüberliegend angeordnet sind, das heißt in ein und derselben Ebene, die im Wesentlichen parallel zu einer der Längsseiten des Kabelrinnenabschnitts ist.

2. Gitterkabelrinnenabschnitt nach Anspruch 1,
**dadurch gekennzeichnet, dass** ein längs verlaufender Kettdraht (2) auf jeder Längsseite des Kabelrinnenabschnitts angeordnet ist.

3. Gitterkabelrinnenabschnitt nach einem der Ansprüche 1 oder 2,
**dadurch gekennzeichnet, dass** die längs verlaufenden Kettdrähte (2) in Längsmittelebenen des Kabelrinnenabschnitts angeordnet sind.

4. Gitterkabelrinnenabschnitt nach einem der Ansprüche 1 bis 3,
**dadurch gekennzeichnet, dass** ein längs verlaufender Kettdraht (2) die freien Ränder der quer verlaufenden Schussdrähte (4) verbindet, die einem Rand der in diesen ausgeführten Öffnung entsprechen.

5. Gitterkabelrinnenabschnitt nach einem der Ansprüche 1 bis 4,
**dadurch gekennzeichnet, dass** die längs verlaufenden Kettdrähte (2) innerhalb der quer verlaufenden Schussdrähten (4) angeordnet sind.

6. Gitterkabelrinnenabschnitt nach einem der Ansprüche 1 bis 5,
**dadurch gekennzeichnet, dass** dieser einen im Wesentlichen rechteckigen Querschnitt aufweist.

7. Kabelrinnenabschnitt nach Anspruch 6,
**dadurch gekennzeichnet, dass** dieser quer verlaufende Schussdrähte (4) mit vier Seiten umfasst, denen vier Längsseiten des Kabelrinnenabschnitts entsprechen:
- ein Boden (6),
- eine erste Seitenwand (8), die an einen ersten Längsrand des Bodens (6) anschließt,
- eine obere Umbiegung (12), die vom Rand der ersten Seitenwand (8) ausgehend dem Boden (6) entgegengesetzt im Wesentlichen parallel zum Boden (6) verläuft und eine geringere Breite als der Boden (6) hat, sowie
- eine zur ersten Seitenwand (8) im Wesentlichen parallele zweite Seitenwand (10), die von dem der ersten Seitenwand (8) entgegengesetzten Rand des Bodens (6) ausgehend verläuft und eine geringere Höhe als die erste Seitenwand (8) hat.

8. Kabelrinnenabschnitt nach Anspruch 7,
**dadurch gekennzeichnet, dass** die Höhe der zweiten Seitenwand (10) im Wesentlichen der halben Höhe der ersten Seitenwand (8) entspricht, und dass die Breite der oberen Umbiegung (12) im Wesentlichen der halben Breite des Bodens (6) des Kabelrinnenabschnitts entspricht.

9. Kabelrinnenabschnitt nach einem der Ansprüche 6 bis 8,
**dadurch gekennzeichnet, dass** dieser einen im Wesentlichen quadratischen Querschnitt aufweist.

## Claims

1. Wire cable raceway element including substantially rectilinear longitudinal warp wires (2) and polygonal transverse weft wires (4), having an opening at one corner and an even number of sides, said element including at least four longitudinal warp wires (2) carried by at least four different sides (6, 8, 10, 12) of the transverse weft wires, characterized on that said four sides (6, 8, 10, 12) carry each a single longitudinal warp wire (2) and in that to each longitudinal warp wire (2) there corresponds a longitudinal warp wire (2) on an opposite side, the two corresponding longitudinal warp wires (2) being disposed face to face, i.e. in a same plane substantially parallel to one of the longitudinal faces of the cable raceway element.

2. Wire cable raceway element according to claim 1, **characterized in that** there is a longitudinal warp wire (2) disposed on each of the longitudinal faces of the cable raceway element.

3. Wire cable raceway element according to either of claims 1 or 2, **characterized in that** the longitudinal warp wires (2) lie in median longitudinal planes of the cable raceway element.

4. Wire cable raceway element according to any one of claims 1 to 3, **characterized in that** a longitudinal warp wire (2) joins the free ends of the transverse weft wires (4) corresponding to one edge of the opening produced therein.

5. Wire cable raceway element according to any one of claims 1 to 4, **characterized in that** the longitudinal warp wires (2) are inside the transverse weft wires (4).

6. Wire cable raceway element according to any one of claims 1 to 5, **characterized in that** it has a substantially rectangular cross section.

7. Cable raceway element according to claim 6, **characterized in that** it includes transverse weft wires (4) having four sides to which correspond four longitudinal faces of the cable raceway element:
- a bottom (6),
- a first lateral flange (8) attached to a first longitudinal edge of the bottom (6),
- an upper rim (12) narrower than and substantially parallel to the bottom (6) extending from the edge of the first lateral flange (8) opposite the bottom (6), and
- a second lateral flange (10) lower than and substantially parallel to the first lateral flange (8) and extending from the edge of the bottom (6) opposite the first lateral flange (8).

8. Cable raceway element according to claim 7, **characterized in that** the height of the second lateral flange (10) substantially corresponds to half the height of the first lateral flange (8), and **in that** the width of the upper rim (12) corresponds substantially to half the width of the bottom (6) of the cable raceway element.

9. Cable raceway element according to any one of claims 6 to 8, **characterized in that** it has a substantially square cross section.
